# EUROPEAN PATENT SPECIFICATION

(11) **EP 4 514 687 B1**
(45) Date of publication and mention of the grant of the patent: **01.07.2026**
(21) Application number: 22726645.9
(22) Date of filing: 29.04.2022
(51) Int. Cl.: B64F 1/02, B64F 1/10, B64F 1/227, B64F 1/228, B64G 5/00

(54) **GROUND VEHICLE SYSTEM FOR LANDING, LAUNCHING AND TAXING OF AIRCRAFT AND SPACECRAFT**
BODENFAHRZEUGSYSTEM ZUM LANDEN, STARTEN UND STEUERN VON LUFT- UND RAUMFAHRZEUGEN
SYSTÈME DE VÉHICULE TERRESTRE POUR L'ATTERRISSAGE, LE LANCEMENT ET LA CIRCULATION AU SOL DES AÉRONEFS ET DES ENGINS SPATIAUX

(43) Date of publication of application: 05.03.2025
(73) Proprietor: Destinus SA, 1530 Payerne (CH)
(72) Inventor: ILIEV, Sergiu Petre, 1530 Payerne (CH); WICKS, Alexander, 1530 Payerne (CH); PAGANO, Antonio, 1530 Payerne (CH); KOKORICH, Mikhail, 1530 Payerne (CH)
(74) Representative: E. Blum & Co. AG
(86) International application number: PCT/EP2022/061537
(87) International publication number: WO 2023/208366

(56) References cited:
- CN-A- 106 516 150
- DE-A1- 3 034 014
- US-A1- 2017 107 001
- US-A1- 2022 055 769
- US-B1- 6 394 391

## Description

### BACKGROUND

The invention relates in general to aircraft carrier ground vehicles, as well as to aircraft landing and take-off methods based on such vehicles. In particular, the invention concerns a ground vehicle comprising a landing platform rotatably mounted on a chassis.

Aircraft landing gears are only utilized during take-off, landing, and taxiing. They perform no useful function in flight. Therefore, the landing gear results in unused mass and volume for much of the aircraft mission. Taking into account the structural reinforcement required by the landing gear, the additional mass induced by a landing gear may typically represent between 5 to 10 % of the total mass of the aircraft.

The purpose of the invention is to minimise the physical constraints resulting from the landing gear in the design and fabrication of an aircraft and thus improve the performance of the aircraft.

From document US 2022/0055769 A1 a ground maneuver assistance system for aircraft, more particularly for airplanes, is known, the system including a carriage driven on a track by a drive means, the speed of which can be matched to a landing or takeoff speed of the airplane, the carriage including a chassis configured to move on the track; a movable platform configured to support the airplane; and means for connecting the platform to the chassis, which means are configured to establish relative movement between the platform and the chassis, and the platform including coupling means configured to grip and release the airplane.

From document DE 3034014 A a device is known which comprises a self-propelled vehicle with a variable drive supporting a platform from which an aircraft is launched or onto which it is received. The course and/or velocity of the vehicle are controlled in dependence on received remote-control signals representing the required course and velocity.

From document US 2017/0107001 A1 a method of landing an aircraft which is overweight or whose landing wheels are not operatively deployed is known, which includes: providing a carriage assembly which may travel along a landing path at the landing speed of the aircraft; providing braking means capable of decelerating the carriage assembly supporting an aircraft to a manoeuvrable speed within the length of the landing strip; operatively positioning the carriage assembly for receiving an aircraft at the end of its flight path; flying the aircraft onto the operatively positioned carriage assembly; and operating the braking means to reduce the speed of the carriage assembly supporting the aircraft.

### SUMMARY

According to a first aspect, the present invention is embodied as an aircraft carrier ground vehicle according to appended claim 1, which comprises a chassis, a landing platform, a coupling mechanism, and an actuation mechanism. The landing platform is designed to accommodate an aircraft. The coupling mechanism connects the landing platform to the chassis to form a kinematic pair, in which the landing platform is rotatably mounted on the chassis. The actuation mechanism is adapted to rotate the landing platform relative to the chassis (i.e., in accordance with the coupling mechanism), to allow an aircraft to land on the landing platform as the vehicle moves along a landing direction of the aircraft and compensate for an inclination angle of the aircraft on landing, in operation. The vehicle further includes latching means adapted for gripping a structural part of the aircraft on landing, wherein the latching means includes a soft robotic suction cup latching mechanism.

The aircraft carrier ground vehicles may further be designed to allow taxiing and take-off of the aircraft.

The invention proposes an aircraft carrier ground vehicle equipped with a pivotable landing platform, which can be regarded as a remote landing gear. Thus, the aircraft does not need to be permanently equipped with a landing gear. This makes it possible to reduce the aircraft mass or, conversely, increase the payload of and volume available in the aircraft. Furthermore, this allows the structural efficiency of the aircraft to be to optimized. In addition, the proposed solution allows an easier maintenance of the aircraft. Remarkably, rotating the platform makes it possible to compensate for the inclination angle of the aircraft and thus better absorb the shock on landing. For completeness, the present approach may be used to achieve smaller landing and take-off distances, e.g., by leveraging propulsion and breaking capabilities of the vehicle (or a tractor unit thereof), in addition to those of the aircraft.

In embodiments, the coupling mechanism is designed to allow an average plane of the landing platform to pivot by at most a first angle around an axis that is parallel to an axle direction of the vehicle. This makes it possible to accommodate for the aircraft pitch angle on landing.

Preferably, the coupling mechanism is further designed to allow the average plane of the landing platform to pivot by at most a second angle around a longitudinal direction of the vehicle, which makes it possible to accommodate for the roll angle of the aircraft on landing.

In preferred embodiments, the coupling mechanism includes a pneumatic suspension system having at least two pneumatic cylinders connecting the chassis to the landing platform. The pneumatic cylinders are actuatable by the actuation mechanism to rotate the landing platform relative to the chassis, in operation. The actuation mechanism may for instance include pressurization means connected to each of the pneumatic cylinders, so as to independently operate the pneumatic cylinders as double-acting cylinders. Preferably, the pneumatic suspension system includes at least four pneumatic cylinders connecting the chassis to the landing platform. More preferably, the pneumatic suspension system includes six pneumatic cylinders; the platform and the pneumatic suspension system may for instance be jointly configured as a Stewart platform. Using pneumatic cylinders was found to provide satisfactory performance in terms of control, stability, and damping.

In embodiments, the coupling mechanism further comprises ball-and-socket joints linking piston rods of respective ones of the pneumatic cylinders to the landing platform, to prevent self-locking. In addition, the coupling mechanism further comprises revolute joints linking respective ones of the pneumatic cylinders to the chassis.

In preferred embodiments, a cylinder tube of each of the pneumatic cylinders is in thermal communication with a heat sink, the latter preferably forming part of the chassis. In variants, the heat sink is in thermal contact with the chassis. The aim is to rapidly absorb heat produced by rapidly compressing the pneumatic cylinders on touch down.

In embodiments, the landing platform further includes a deformable material layer, preferably a foam material layer. The deformable material layer extends on an exposed surface of the landing platform. This deformable layer provides an additional damping means, helps stabilizing the aircraft, and ensures friction between the aircraft and landing platform, hence working towards a coupling of the two surfaces.

Preferably, the vehicle further includes a pressurization system, and the soft robotic suction cup latching mechanism comprises an array of suction cups that are at least partly embedded in the deformable material layer. The suction cups are connected to the pressurization system and are open on an exposed surface of the deformable material layer. The pressurization system is used to create a depression in the cups, allowing the cups to grip the aircraft on landing or maintain it before take-off. Conversely, the pressurization system may also be actuated to provoke a positive pressure surge, to help the aircraft to separate from the platform on take-off.

In embodiments, the vehicle further includes one or more auxiliary dampers, to best accommodate for the underside of the aircraft. Each auxiliary damper includes a landing pad, so as to allow the aircraft to land on both the landing platform and the one or more auxiliary dampers as the vehicle moves along the landing direction of the aircraft, in operation.

The vehicle may advantageously include a vehicle control system that comprises one or more control units coupled to the actuation mechanism to control a rotation of the landing platform relative to the chassis. The vehicle control system may further comprise one or more receivers coupled to the one or more control units, hence allowing remote control of the landing platform. The receivers are configured to receive instruction signals (e.g., from an external control unit) for the vehicle control system to forward corresponding control signals to the one or more control units, and accordingly control a rotation of the landing platform.

In embodiments, the vehicle is a powered vehicle such as an electric vehicle. The vehicle is preferably an autonomous vehicle, a semi-autonomous vehicle, or a remotely-controlled vehicle.

In variants, the vehicle is a trailer equipped with a trailer coupler adapted to mechanically link to a coupling component of a powered tractor unit. The trailer coupler is preferably a multi-link coupler, which, more preferably, includes or is coupled to a shock-absorbing device. According to another aspect, the invention is embodied as an aircraft carrier ground vehicle system according to appended claim 13. The system comprises one or more aircraft carrier ground vehicles as described above. In embodiments, the system includes at least two of such vehicles. Each vehicle may for instance be a powered vehicle, which is remotely controlled. In that respect, the system may further include a central control unit that is configured to transmit control signals to each vehicle, and preferably receive sensor signals from each vehicle. The aim is not only to remotely control the rotation of the landing platforms of the vehicles to compensate for an inclination angle of the aircraft on landing, but also to coordinate movements of the vehicles to allow an aircraft to land on the landing platforms of the vehicles as they move along the landing direction of the aircraft, in operation.

According to a further aspect, the invention is embodied as a method of landing an aircraft according to appended claim 15, which relies on an aircraft carrier ground vehicle as described above. According to this method, the vehicle is accelerated, and its speed is adjusted to a landing speed of the aircraft, to bring the vehicle at a landing position of the aircraft. In addition, the landing platform of the vehicle is rotated to match an inclination angle of the aircraft. The aircraft is finally landed on the landing platform as the vehicle moves along the landing direction of the aircraft. As noted above, several vehicles may be used, which can be operated as a swarm.

According to a final aspect, the invention is embodied as an aircraft take-off method according to appended claim 16, which relies on an aircraft carrier ground vehicle as described above. According to this method, an aircraft is first loaded and stowed on the landing platform of the vehicle. The vehicle is then accelerated to a take-off speed of the aircraft. The aircraft is released for take-off with the landing platform rotated to a suitable take-off configuration. Again, several vehicles may be relied on.

### BRIEF DESCRIPTION OF THE DRAWINGS

These and other objects, features and advantages of the present invention will become apparent from the following detailed description of illustrative embodiments thereof, which is to be read in connection with the accompanying drawings. The illustrations are for clarity in facilitating one skilled in the art in understanding the invention in conjunction with the detailed description. In the drawings:
FIGS. 1 and 2 are side views of the aircraft carrier vehicle according to embodiments. In FIG. 1, the landing platform is in a horizontal position, while it is slightly pivoted with respect to an axis parallel to the axle direction, which ideally coincides with the pitch axis of the aircraft on landing. The vehicle includes a pneumatic system with pneumatic cylinders supporting the landing platform;
FIG. 3 is a front view of the aircraft carrier vehicle of FIGS. 1 and 2, further showing an aircraft resting on the landing platform of the vehicle, as of after landing or before take-off, as in embodiments;
FIG. 4A is a front view of a variant to the vehicle of FIGS. 1 to 3, where the vehicle further includes auxiliary (lateral) dampers, which are supported by additional pneumatic cylinders, as in embodiments. The actuation of the auxiliary dampers is independent from the cylinders actuating the central landing platform;
FIG. 4B illustrates a variant to FIG. 4A, where the lateral dampers are hinged to the central landing platform, as in embodiments;
FIG. 5 is a front view of a further variant, in which the landing platform is configured as a Stewart platform, as in embodiments;
FIGS. 6 and 7 respectively illustrate the landing and take-off of an aircraft on/from a vehicle with a rotatable landing platform, as in embodiments;
FIG. 8 shows details of a pneumatic cylinder of a coupling mechanism, which couples the chassis of the vehicle to the landing platform, as in embodiments;
FIG. 9 is a side view of an aircraft carrier trailer vehicle towed by a powered tractor unit, according to embodiments;
FIG. 10 is a diagram schematically illustrating components of a system according to embodiments. The system includes several aircraft carrier ground vehicles, as well as a central control unit, which transmits signals to the vehicles to remotely control at least some of the functions of the vehicles, such as the platform rotation, as in embodiments;
FIG. 11A (front view) and 11B (top view) illustrate how a train of vehicles can be operated for take-off, as in embodiments. FIG. 11C (front view) and 11D (top view) illustrate a different configuration of the vehicles, which may be used on landing the aircraft, as in embodiments;
FIG. 12 is a graph representing various landing platform configurations and sizes that may be used for take-off and landing of aircrafts of various sizes and weights, as in embodiments;
FIG. 13 is a 3D view of a deformable (foam) material layer, in which suction cups are embedded. The suction cups are pressurized to grab the aircraft fuselage on landing, or secure the fuselage before take-off, as in embodiments; and
FIG. 14 is a block diagram schematically illustrating selected components of a control system of a vehicle according to embodiments.

The accompanying drawings show simplified representations of aircrafts, vehicles, and systems, or parts thereof, as involved in embodiments. Technical features depicted in the drawings are not necessarily to scale. Similar or functionally similar elements in the figures have been allocated the same numeral references, unless otherwise indicated.

Vehicles, systems, and methods embodying the present invention will now be described, by way of non-limiting examples.

### DETAILED DESCRIPTION OF EMBODIMENTS OF THE INVENTION

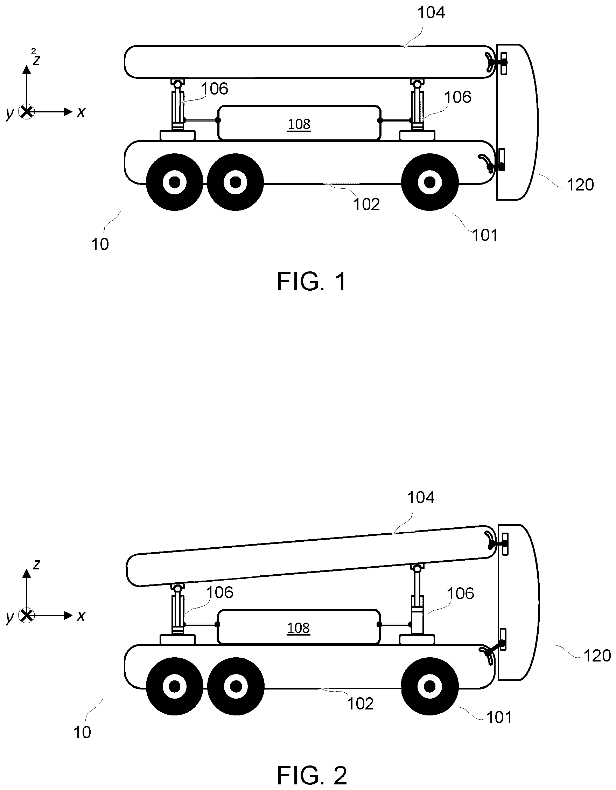

A first aspect of the invention is now described in detail, in reference to FIGS. 1 - 9. This aspect concerns an aircraft carrier ground vehicle 10, 10a - d.

An "aircraft carrier ground vehicle" is to be interpreted as a vehicle that may notably be railed or wheeled (as assumed in the accompanying drawings), and which is adapted to carry and transport an aircraft. The vehicle may possibly be a trailer 10d towed by a powered vehicle 30 (i.e., a tractor unit), or a powered vehicle 10, 10a - c, such as an electric vehicle, a vehicle equipped with a combustion engine, or a hybrid vehicle. The vehicle may possibly be driven by an operator, autonomous, or remotely controlled (at least partly). The vehicle may also be semi-autonomous, whereby some of its functions are autonomous, while its residual functions can be (possibly remotely) controlled by an operator or a computerized process.

The vehicle essentially includes a chassis 102, a landing platform 104, 104a, a coupling mechanism 106, 106c, and an actuation mechanism 108, 108a - c, as illustrated in FIGS. 1 -5. Various embodiments are illustrated in the accompanying drawings, where the vehicles shown differ in terms of coupling mechanisms and platform configurations.

The chassis 102 (i.e., the vehicle frame, or a rolling chassis) is the load-bearing framework of the vehicle; it structurally supports the vehicle and is dimensioned and structured in accordance with the functions to be performed by the vehicle, as described below. The chassis 102 supports the coupling mechanism 106, 106c. The actuation mechanism 108, 108a - c can be mounted on the chassis, as assumed in the accompanying drawings, or be fully or partly integrated in the chassis. As usual, the chassis 102 may further integrate a motor (should the vehicle be self-powered) and include wheels and transmission.

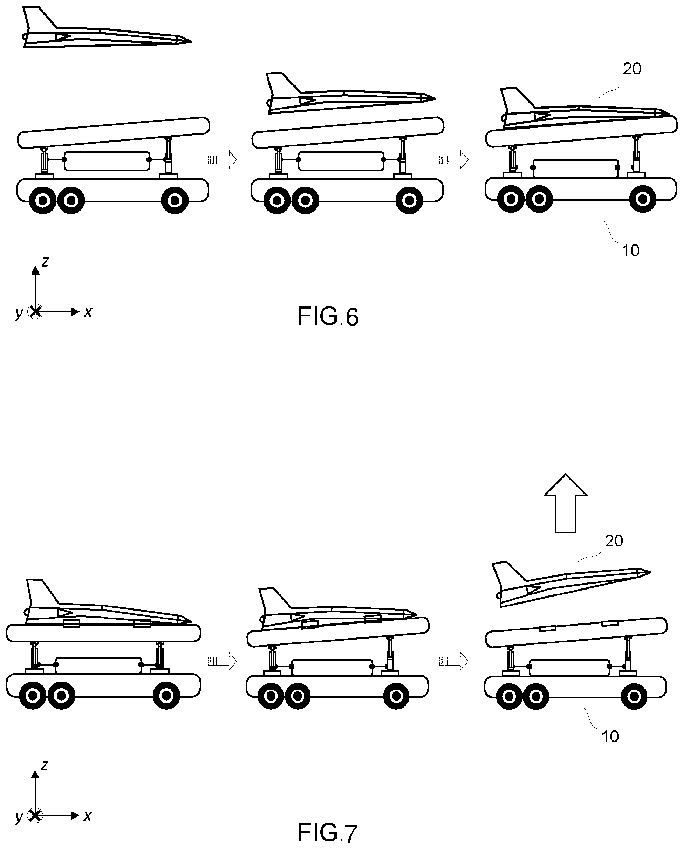

The landing platform 104, 104a is generally designed to accommodate an aircraft. The landing platform may notably be designed as a continuous landing deck, in which case it can be regarded as a landing bed, as illustrated in FIG. 6. In variants, the platform includes several landing pads, which are mounted on a same platform frame, possibly via separate damping means. The pads may optionally have different relative orientations. The landing pads can further be shaped to optimally fit the lower surface of the fuselage on touch down.

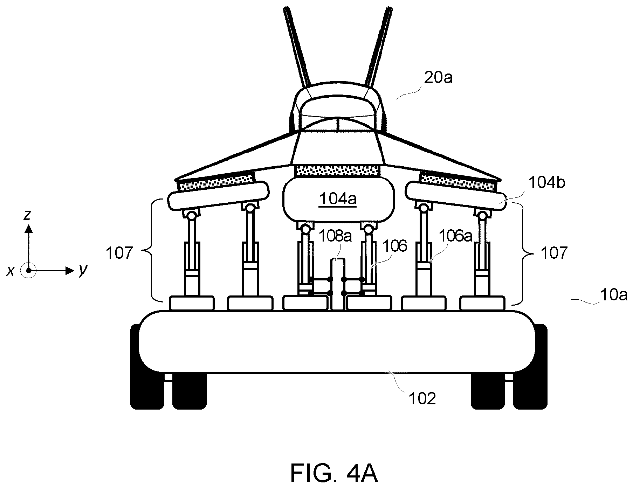

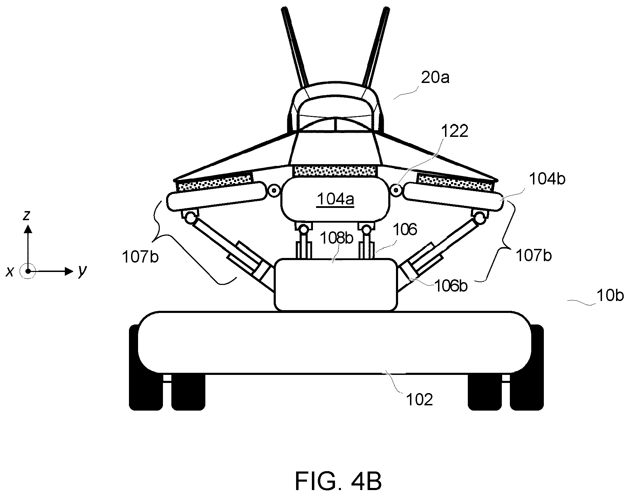

In embodiments, the vehicle includes distinct landing platforms, which may be individually and independently rotated. In simpler variants, the vehicle 10a, 10b includes a main platform (which can be rotated relative to the chassis), as well as auxiliary (lateral) damping pads 104b, as illustrated in FIGS. 4A and 4B. Note, in the present context, "damping" and "dampers" refer to functions and devices, which make it possible to absorb, alleviate, attenuate, or suppress shocks or vibrations.

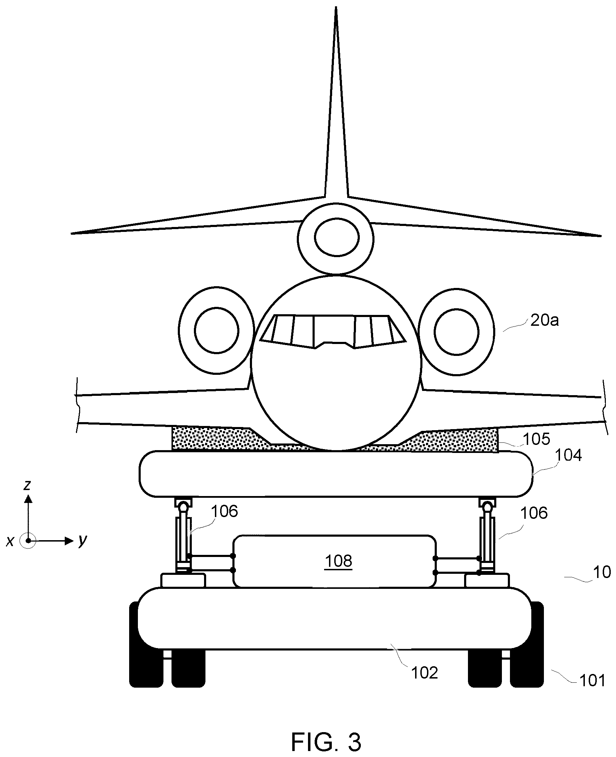

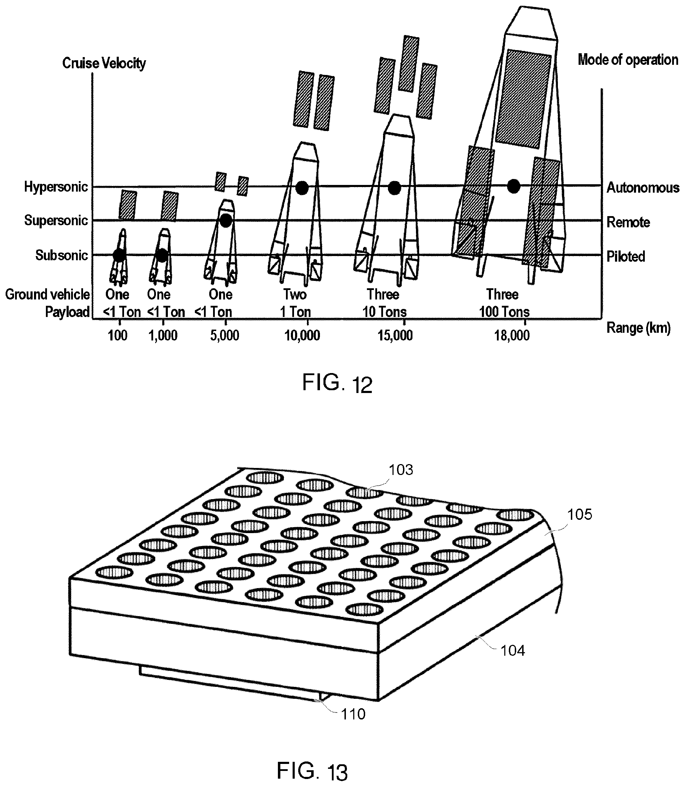

The landing platform 104, 104a preferably includes a deformable material layer 105 extending on top of the main platform frame. The deformable material layer 105 may for instance include a foam material. The layer 105 extends on the exposed surface of the platform, as explicitly shown in FIGS. 3 - 5. The layer 105 deforms to accommodate the shape of the aircraft 20a, see FIG. 3. The layer may further be designed so as to initially have a conformal shape, e.g., a concave shape to fit the fuselage, a convex shape to fit wings protruding downward, or a more complex shape. Moreover, the deformable layer 105 may advantageously embed suction cups 103, as depicted in FIG. 13.

The coupling mechanism 106, 106c connects the landing platform 104, 104a to the chassis 102, so as to form a kinematic pair, according to which the landing platform 104, 104a is rotatably mounted on the chassis 102. That is, the kinematic pair imposes constraints on the relative movement of the landing platform and the chassis.

The actuation mechanism 108, 108a - c is generally designed, and thus adapted, to rotate the landing platform 104, 104a relative to the chassis 102. More precisely, the actuation mechanism causes the landing platform to rotate, to the extent permitted by the coupling mechanism. In other words, the actuation mechanism cooperates with the coupling mechanism to rotate the platform. The aim is to allow an aircraft 20, 20a to land on the landing platform 104, 104a as the vehicle 10, 10a - d moves along the landing direction of the aircraft 20, 20a. Rotating the platform makes it possible to compensate for the inclination angle of the aircraft 20, 20a and thus to better absorb the shock on landing. So, the present vehicles 10, 10a - d can be regarded as remote landing gears with rotatable landing beds for landing aircrafts 20, 20a.

Further comments are in order. The landing platform 104, 104a is rotatably mounted on the chassis 102, meaning that it can pivot around at least one axis, the latter preferably corresponding to the pitch axis of the aircraft as the vehicle aligns its trajectory with that of the aircraft on landing. In embodiments, the platform can rotate around two axes, which correspond to the pitch and the roll axes of the aircraft. The landing platform may further have one or two translational degrees of freedom, whereby the landing platform can be displaced (to a limited extent) parallel to the average plane of the chassis 102 (i.e., parallel to the runway plane, using active translation means) or perpendicular thereto (e.g., using active means to elevate the platform or passive means on damping). So, that the landing platform is rotatable means that that the coupling mechanism 106, 106c allows rotation with respect to at least one axis, and preferably two axes, besides possible translational degrees of freedom the platform may have. The fact that the landing platform can be rotated (to the extent permitted by the kinematic pair) allows the aircraft carrier ground vehicle to compensate for (i.e., accommodate for, adapt to) the inclination angle of the aircraft on landing. The inclination angle can be any angle the aircraft has on landing, starting with the pitch angle and, to a lesser extent, the roll angle. The yaw angle is less an issue, since the aircraft will essentially land on its fuselage, which lessens the effect of the slight yaw angle it may have on touch down. Also, the yaw angle can be accommodated for by making the landing bed substantially larger than the aircraft. Conversely, making the landing bed smaller than the fuselage would not necessarily preclude a capture by the platform. So, the landing platform can be made rotatable with respect to only two axes (corresponding to the pitch and roll axis). In principle, however, the landing platform and the coupling mechanism may possibly be designed so as for the platform to rotate around all thee axes. The pitch, roll, and yaw angles are typically small in practice (e.g., less than 10°, typically between 4 and 7°), such that the landing essentially remains a horizontal-type landing, as opposed to vertical landing approaches, notwithstanding the ability of the platform to rotate. Note, the apparent pitch angle in FIG. 6 is purposely exaggerated, in the interest of depiction.

The aircraft 20, 20a may notably be a spacecraft designed to land as a glider. However, the spacecraft may also be self-powered and may possibly use propulsion on landing. In practice, the aircraft may weigh up to several (even hundreds) of tons. Thus, the dimensions and mechanical resistance properties of the platforms, the coupling mechanism, the chassis, and the actuation mechanism, must be commensurate with characteristics dimensions, mass, mechanical resistance, vertical speed, etc., of the aircraft on landing.

The coupling mechanism mechanically couples the platform with the chassis. Various coupling devices may potentially be involved, e.g., pneumatic cylinders, hydraulic cylinders, and/or hydropneumatic devices. In particular, the coupling mechanism may combine different types of systems, such as pneumatic and hydraulic systems. For instance, the coupling system may involve one or more pneumatic air-oil hydraulic shock absorbers such as oleo struts, complemented by further means to rotate the platform (e.g., pneumatic cylinders). In simple embodiments, however, the coupling mechanism relies on pneumatic cylinders only, as assumed in the accompanying drawings.

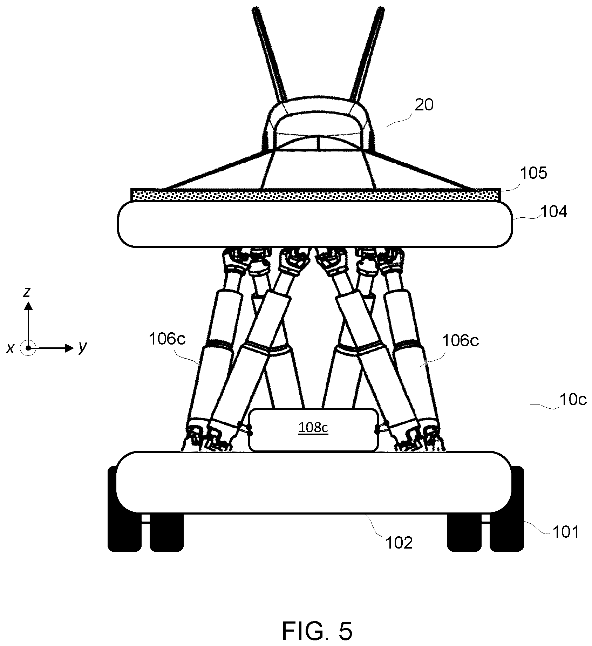

For instance, the coupling mechanism may possibly be designed so as for the platform to have a hexapod- or Stewart platform-like configuration, as in FIG. 5. Care should be taken for the coupling design to prevent self-locking. To that aim, the coupling mechanism may involve various types of joints, such as ball-and-socket joints 109, planar joints, pin joints, rack and pinions, etc. Thus, the coupling mechanism may enable various attitude controls, which can be exploited to best receive the aircraft on landing. Because the coupling mechanism 106, 106c mechanically connects the landing platform 104, 104a with the chassis 102 in a way that constraints the possible degrees of freedom of the platform, the landing platform 104, 104a and the chassis 102 form a kinematic pair.

Besides the coupling mechanism, latching mechanisms are involved, including a soft robotic suction cup latching mechanism. The aim is to be able to grasp the aircraft as the latter is landing, e.g., to prevent the aircraft from bouncing. In addition, the platform may possibly include fasteners to secure the aircraft on the platform once it has landed. Once the aircraft is secured on the platform, the kinematic pair formed by the platform and the chassis constraints the relative movement of, on the one hand, the landing platform 104, 104a and the aircraft 20, 20a and, on the other hand, the chassis 102.

The actuation mechanism 108, 108a - c is preferably mounted on or (at least partly) integrated in the chassis 102, be it to lower the gravity centre of the vehicle. In the accompanying drawings, the actuation mechanism is assumed to be mounted on the chassis. In variants, the actuation mechanism is mounted on the platform, hence offering a different weight ratio between the platform and the chassis. The actuation mechanism 108, 108a - c cooperates with the coupling mechanism, at least indirectly. E.g., where the coupling mechanism consists of pneumatic cylinders, the actuation mechanism includes pressurization means that pressurizes a working fluid (e.g., air or nitrogen) in the rodless cavity under the piston head and/or in the piston rod cavity to actuate the piston rod. I.e., the actuation mechanism cooperates with the pneumatic cylinders, mechanically, to rotate the platform. In variants, the actuation mechanism may operate independently of the coupling mechanism. E.g., electromagnetic means may be used to rotate the platform. In that case, the actuation mechanism only indirectly cooperates with the coupling mechanism, although actuating the platform still impacts the kinematic pair and thus the configuration of the coupling. In further variants, the actuation mechanism and the coupling mechanism may form part of a very same mechanism (e.g., a mechanical linkage).

Both the landing platform and the chassis may advantageously be aerodynamically profiled and/or include aerodynamic structures. In particular, the vehicle may include active aerodynamic features, such as a motorized front spoiler 120, as assumed in FIGS. 1 and 2. The vehicle may further be equipped with passive aerodynamic features (not shown), such as an air dam, a rear spoiler, etc., to control the aerodynamic forces acting upon the system at high speeds (e.g., reduce drag during acceleration and increase it during deceleration, change vehicle centre of pressure, increase or decrease downforce). The tractor unit 30 may similarly be aerodynamically profiled, should the aircraft carrier vehicle be embodied as a trailer.

The present solution has several advantages. The invention proposes an aircraft carrier ground vehicle equipped with a pivotable landing platform, which can be regarded as a remote landing gear. Thus, the aircraft does not need to be permanently equipped with a landing gear. This makes it possible to reduce the aircraft mass or conversely increase the payload of and volume available in the aircraft. Moreover, this allows the structural efficiency of the aircraft to be improved. In particular, the absence of landing gear makes it possible to relax structural reinforcement constraints that normally apply to the load bearing structure to accommodate the landing gear. However, the load bearing structure still need to be designed to allow landing on the fuselage.

In addition, the proposed approach allows an easier maintenance of the aircraft. Moreover, this approach may be used to achieve smaller landing and take-off distances, e.g., by leveraging propulsion and breaking capabilities of the vehicle (or a tractor unit thereof), in addition to those of the aircraft.

The present aircraft carrier ground vehicles may be used for landing only, should the aircraft use other take-off means, such as a launching ramp for vertical take-off (possibly assisted by boosters), another type of aircraft carrier ground vehicle (e.g., railed instead of being wheeled), or an ejectable landing gear. In variants, the same vehicle may also be used for taxiing and take-off, as in embodiments discussed below.

For completeness, the present approach is fairly easily scalable. It can notably be applied to aircrafts weighting tens of kilograms to hundreds of tons and ranging from low-speed aircrafts such as high-altitude long endurance aircrafts, including drones to high-speed vehicles such as hyperplanes and space planes, as illustrated in FIG. 12.

All this is now described in detail, in reference to particular embodiments of the invention. To start with, the coupling mechanism 106, 106c shall typically be designed to allow the average plane of the landing platform 104, 104a to pivot by at most a first angle around an axis that is parallel to the axle direction of the vehicle 10, 10a - d. The design of the coupling mechanism (e.g., relying on pneumatic cylinders) typically limits the rotation angle(s). In the present case, the coupling mechanism may be designed so as to restrict the maximal rotation angle(s) to less than 10°, or even less than 8° or 7°. The axle direction corresponds to axis y in the accompanying drawings.

In other words, the coupling mechanism 106, 106c allows the landing platform to pivot with respect to the average plane of the chassis 102, around the axle direction, which ideally coincides with the pitch axis of the aircraft on landing. The average plane of the chassis is parallel to plane (*x*, *y*) in the drawings. The axle direction is parallel to the plane (*x*, y) and orthogonal to the longitudinal direction *x* of the vehicle. So, the axle direction is parallel to the runway plane and orthogonal to the landing direction, at least under ideal landing conditions. Pivoting the platform around the pitch axis makes it possible to accommodate for the aircraft pitch angle on landing.

Similarly, the coupling mechanism 106, 106c may be designed to allow the average plane of the landing platform 104, 104a to pivot by at most a second angle around the longitudinal direction x. That is, the coupling mechanism 106, 106c further allows the landing platform 104, 104a to pivot with respect to an axis that ideally corresponds to the roll axis, which extends parallel to the longitudinal direction of the vehicle. This makes it possible to accommodate for the roll angle of the aircraft 20, 20a on landing. The maximal rotation angle permitted around the roll axis can be substantially less than the first angle (pitch angle), in practice, consistently with the fact that the roll angle of the aircraft will likely be less than its pitch angle on landing. In that respect, the coupling mechanism and the actuation mechanism may possibly be designed so as to restrict the maximal rotation angle around the roll axis, notably for it to be less than the maximal rotation angle around the pitch axis, e.g., less than 8° or 7°, or less.

As noted earlier, the coupling mechanism of the vehicle 10, 10a - d may notably involve pneumatic cylinders, as assumed in FIGS. 1 - 9. More precisely, the coupling mechanism 106, 106c may include a pneumatic suspension system, which involves at least two pneumatic cylinders 106, 106c, where the cylinders connect the chassis 102 to the landing platform 104, 104a. Two pneumatic cylinders may suffice to pivot the platform around one axis, in principle. In practice, however, the coupling mechanism may include more than two pneumatic cylinders 106, 106c, e.g., four pneumatic cylinders, as in FIGS. 1 - 3. The landing platform typically forms a quadrangle (in top view), such that each cylinder may connect a respective corner of the platform. Each piston may either connect to the chassis 102 or the platform 104 (as assumed in the accompanying drawings), while the respective cylinder tube (barrel) connects to the companion part (the platform or the chassis). Such connections typically involve joints, as discussed later in detail. Additional pneumatic cylinders 106a, 106b may further be involved, e.g., to support auxiliary damping pads 104b, as in FIG. 4A and 4B.

All such pneumatic cylinders 106, 106c can be actuated by an actuation mechanism 108, 108a - c, notably to rotate the landing platform 104, 104a relative to the chassis 102. Actuating the pistons of the pneumatic cylinders via the actuation mechanism allows the landing platform to be pivoted around one or two rotation axes. The pneumatic cylinders are arranged about peripheral portions of the platform to achieve the desired rotation(s), e.g., on opposite sides of the platform. In principle, two pneumatic cylinders can be arranged on opposite sides of the platform to pivot the latter around one axis, e.g., the pitch or roll axis. Adding two opposite cylinders on the remaining sides further allows the platform to be rotated around a second axis.

Thus, the pneumatic suspension system may possibly include four pneumatic cylinders 106, 106c. Adding further pneumatic cylinders will provide additional power, stability, and damping. For example, the pneumatic suspension system may include six pneumatic cylinders 106c, as shown in FIG. 5, where the platform 104 and the pneumatic suspension system 106c are jointly configured as a Stewart platform (also known as Gough-Stewart platform).

FIGS. 1 - 5 assume the use of pneumatic cylinders. In variants, hydropneumatics devices (e.g., similar to oleo struts) can be devised, which combine gas (e.g., nitrogen) and liquids (e.g., hydraulic oil) to absorb the impact energy and dissipate it, respectively. Modulating the gas pressure and/or liquid quantity allows platform attitudes such as pivot angles to be controlled.

In other variants, the landing platform can be primarily coupled to the chassis via a shaft, a ball-and-socket joint, or any other suitable type of joint allowing rotation (not shown). For example, use can be made of a spherical ball-and-socket joint, including a spherical ball (or a spherical shape) at the centre of the landing platform, where the spherical ball (or shape) is received in a complementary shaped part in the chassis (e.g., in the vicinity of its centre), thanks to which the landing platform can rotate relative to the chassis. In that case, auxiliary coupling means such as pneumatic cylinders can be used to rotate the landing platform; one or two pneumatic cylinders may suffice. Electromagnetic actuation means may be used too. However, the primary coupler does not ensure any damping, such that an additional damping mechanism is needed. One may, in principle, leverage the damping (e.g., suspension) mechanism of the chassis itself. Preferably, however, auxiliary damping means are used. For example, the complementary shaped part of the chassis receiving the spherical part of the joint may be mounted on a pneumatic suspension that is distinct from the damping mechanism of the vehicle.

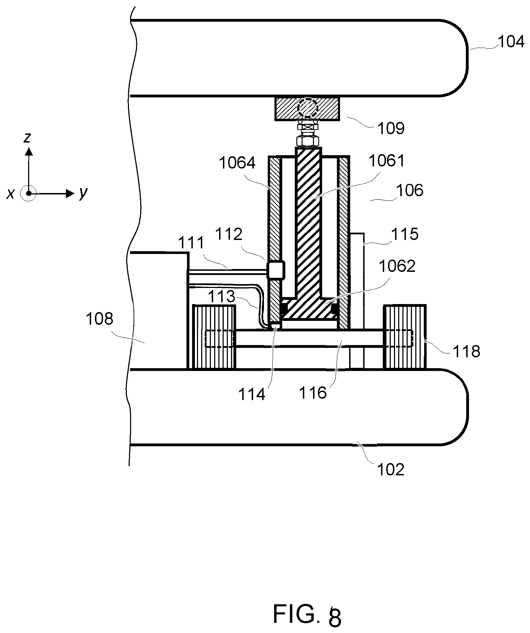

Preferred, however, is to rely on a pneumatic system involving at least four pneumatic cylinders, which are not only used to rotate the platform but also serve as dampers on touch down. In that respect, the actuation mechanism 108, 108a - c may advantageously include pressurization means connected to each cavity (the rodless cavity and the rod cavity) of each pneumatic cylinder 106, 106c, with a view to operating each of the pneumatic cylinders 106 independently, 106c as double-acting cylinders, as assumed in FIG. 8. In this example, two valves 112, 114 are provided on the cylinder part 1064, which connect to pressurization means of the actuation mechanism 108 via respective pneumatic hoses 111, 113, whereby pressurized air (or another working fluid) can be injected on both sides of the piston rod 1061 to act thereon and rotate the platform 104.

The cylinder shown in FIG. 8 is preferably operated as follows. A pressurized fluid is injected via controlled valves 112 and/or 114 to actuate the piston rod and rotate the platform, for it to reach a desired landing configuration. The valves may automatically close after each pressure adjustment. In variants, pressure is maintained in each cylinder cavity until the aircraft lands on the platform. Upon touching the platform, the aircraft compresses the piston, which causes to compress the fluid in the rodless cavity, hence dampening the shock.

More sophisticated types of cylinder system can be contemplated in variants. For example, the cylinder may be designed as an oleo strut, whereby a metering pin protrudes in an inner oil chamber, to compress gas on top and dampen the rebound movement. The following description, however, assumes that use is made of pneumatic cylinders, which allow fairly simple designs and fabrication.

As further seen in FIG. 8, the coupling mechanism 106 may include ball-and-socket joints 109 linking the piston rods 106 of respective pneumatic cylinders 106 to the landing platform 104, to enable the desired rotations and prevent self-locking. Note, the ball-and-socket joints 109 may possibly be arranged at the top of the piston rod (as in FIG. 8), or at the bottom of the cylinder tubes (barrels) 1064, or both. However, distinct linking mechanisms can be used at the top and bottom of the cylinders 106.

For instance, the coupling mechanism 106 may further comprise revolute joints 116, 118 (also called pin joints or hinge joints) linking respective cylinders 106 to the chassis 102, as further illustrated in FIG. 8. In this example, the revolute joints are below the cylinder tubes. In simpler variants, the cylinders may be rigidly fixed to the chassis or fixed via a spring joint, to further damp on touch down, for example. As noted earlier, the chassis 102 typically includes, or is coupled to, a damping mechanism, such as a car-like air suspension mechanism or a leaf-spring suspension. Several damping mechanisms may thus be cascaded, to better absorb the shock on touch down.

As further illustrated in FIG. 8, the cylinder tube 1064 of each cylinder 106 can advantageously be set in thermal communication with a heat sink 102, e.g., via a metallic part 115. The heat sink may notably be the chassis 102 itself or form part thereof. The aim is to rapidly absorb heat produced upon rapidly compressing the pneumatic cylinders on touch down.

As depicted in FIGS. 3 - 5 and 13, the landing platform 104, 104a preferably includes a deformable material layer 105, preferably made from a foam material, which extends on the exposed surface of the landing platform 104, 104a. Auxiliary dampers 104b may include such a deformable layer too. This layer 105 shall preferably deform elastically, so as to be reusable. The deformable layer 105 provides an additional damping means. E.g., a foam mattress can be provided to complement the damping actions of the damping system of the vehicle and the pneumatic cylinders 106, 106c, whereby some of the kinetic energy transferred on landing is absorbed by the deformable layer.

As evoked above, the vehicle 10, 10a - d may optionally include one or more auxiliary dampers 107, 107b, each including a landing pad 104b, which is preferably covered with a deformable layer, similar to layer 105 on the main landing platform 104a. This way, the aircraft 20, 20a can land on both the landing platform 104a and the auxiliary dampers 107, 107b. The additional dampers 107 can be arranged on any side of the main landing platform 104a (e.g., in front of or behind the main platform 104a, or on a lateral side), so as to best accommodate for the underside of the aircraft, see FIGS. 4A and 4B. Such dampers may for instance be mounted on two or more pneumatic cylinders 106a, as in FIG. 4A, or laterally hinged to the central platform 104a, and damped thanks to one or more pivotable cylinder pistons 106b, as assumed in FIG. 4B. The design of the actuation unit 108b can easily be adapted to connect to and pressurize the additional pneumatic cylinders 106a, 106b. On landing, the pads 104b move (if necessary, asymmetrically) to best accommodate the aircraft position, which may likely be slightly off-nominal.

As seen in FIG. 13, the vehicle may further include an array of suction cups 103 that are embedded in the deformable material layer 105. The suction cups 103 are open on the exposed surface of the layer 105. The suction cups 103 are connected to a pressurization system 110, which is preferably distinct from the pressurization means 108, 108a - c used to actuate the pneumatic cylinders, to suitably decouple operations. The pressurization system 110 may be arranged under the platform 104 or laterally. The pressurization system 110 is used to create a depression in the cups, allowing the cups to grip the aircraft on landing or secure it before take-off. In practice, one will attempt to achieve a pressure in the cups that is significantly lower than the ambient atmospheric pressure (e.g., less than 500 mbar or, even, less than 100 mbar, depending on the size and mass of the aircraft, and the number and size of the cups).

The suction cups 103 can be pressurized to grab the fuselage on landing, notably to prevent bouncing (normal force) and sliding of the aircraft during deceleration (shear force). They can also maintain the fuselage when taxiing and before take-off (shear force). The suction cups 103 can be fully embedded in the foam bed, see FIG. 13, such that their apertures are flush (or essentially flush) with the top surface of the deformable material layer 105. Still, the apertures of the cups may slightly protrude (e.g., by a few millimetres) above the top surface of the deformable material layer 105. That the layer 105 deforms on landing allows the upper plane of the suction cups to better adapt to the local surface geometry of the aircraft and, thus, to maintain a good grasp. Conversely, the pressurization system 110 may possibly be actuated to provoke a positive pressure surge, to help the aircraft to separate from the platform on take-off.

In addition to pressurized suction cups (which are a soft robotic latching means), other latching means may be involved, which are adapted for gripping a structural part of the aircraft 20, 20a on landing. Examples of suitable latching means include a hard robotic mechanical latching (i.e., mechanical gripping means) and a magnetic attraction mechanism. The structural part at issue may notably be the skin of the aircraft (e.g., the skin of the fuselage or wings) or another internal structural element, such as spars or stringers exposed though the opening of a hatch in the aircraft skin.

In addition, the vehicle may use one or more brake systems, including aerodynamic braking elements or devices (e.g., airbrake, spoiler, parachute), disk-braking at high speeds (e.g., hydrodynamic braking, eddy current braking) and low speeds (e.g., carbon ceramic brake disks and pads). Moreover, the vehicle may optionally include further equipment, such as a compact arresting system and/or a compact catapulting system, as well as active aerodynamic surfaces for controlling vehicle dynamics.

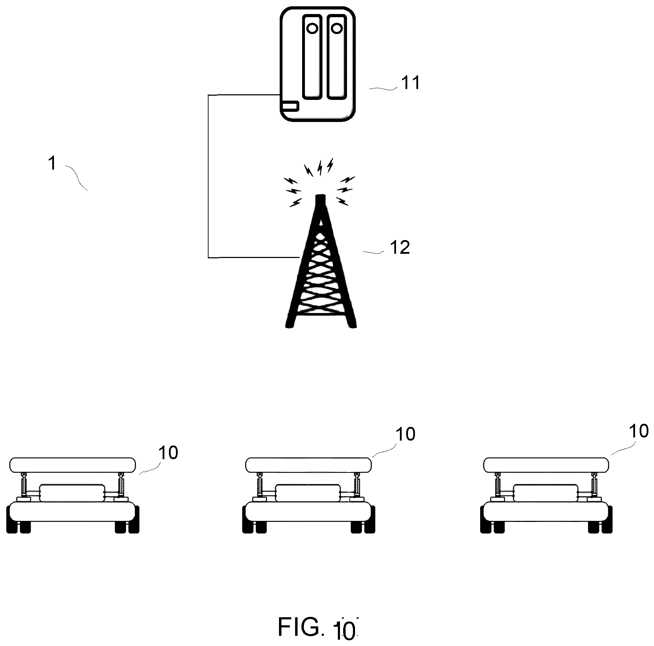

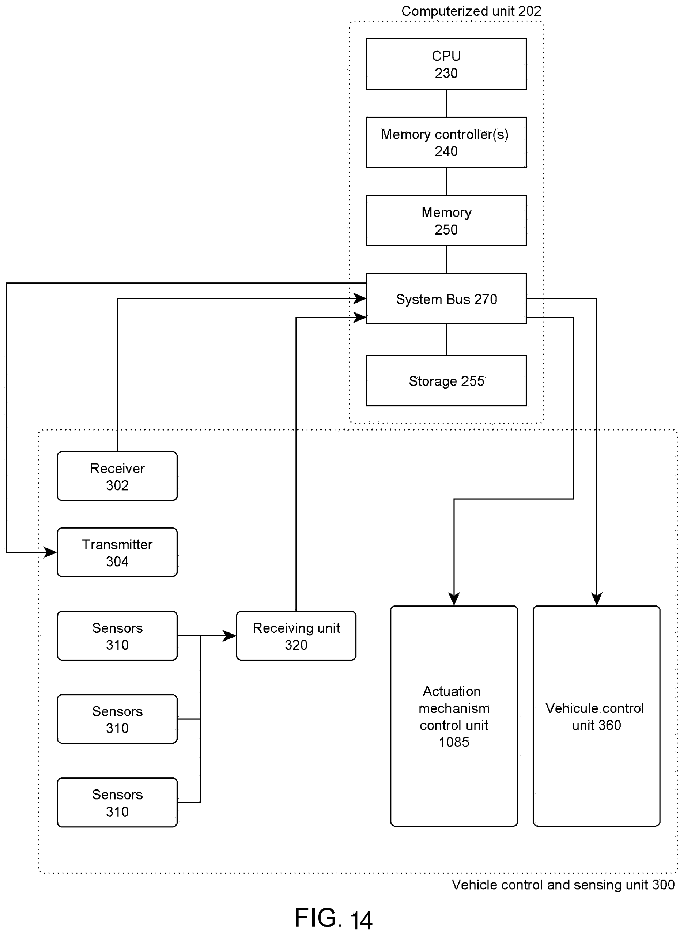

As noted earlier, the present vehicles may be autonomous, semi-autonomous, or remotely controlled (e.g., by an automated process), whereby some or all their functions may be automatically performed. To that aim, the present vehicles may include an advanced vehicle control system 360. A high-level functional diagram of such a control system 360 is shown in FIG. 14. The control system 360 may notably include one or more control units 1085 connected to the actuation mechanism 108 to control a rotation of the landing platform 104 relative to the chassis 102. In addition, the system 360 may include receivers 302 coupled to the control unit(s) 1085. Such receivers 302 are configured to receive instruction signals, e.g., from a remote-control unit 11 (e.g., forming part of a checkpoint or a control tower, see FIG. 10), which they can then forward to a computerized unit 202, for the latter to forward corresponding control signals to the control units 1085. Intermediate processing may be performed at the computerized unit 202, if necessary. The receivers 302 may in fact be transceivers, or the vehicle may further include transmitters 304, whereby the vehicle control system 360 can transmit sensor readings to the external control unit 11, with a view to remotely controlling the in-vehicle actuation mechanism 108 and, optionally the vehicle speed and direction too. In fact, various telemetry values may be remotely transmitted, including tank and cylinder pressures, battery system voltages and current draw, GPS position, break temperature, impact force etc.

In the example of FIG. 14, sensors 310 are provided, which are configured to detect events or changes in the environment of the vehicle. The sensors accordingly produce signals, which are transmitted to a receiving unit 320, where the signals may be pre-processed, if needed. The computerized system 202 is connected to the receiving unit 320, so as to receive signals from the unit 320. Similarly, the computerized system 202 receives and processes signals from the receiver 302. Signals received from the sensor receiving unit 320 and/or the receiver 302 may possibly require further processing, in order to be exploited by software executing at the central processing unit (CPU) 230 of the computerized system 202. In operation, computerized methods (typically in the form of software) are loaded in the main memory 250 of the system 202 to cause the processing means 230 to produce real-time signals to actuate the actuation mechanism 108 and other units of the vehicle (notably a motion control unit), based on the signals received from the receivers 302 and the receiving unit 320. In particular, the computerized system 202 may be connected to a motion control unit 360 and instruct the latter to operate the vehicle in a partly or fully autonomous manner, or automated manner. As usual, the system 202 may include memory controllers 240, a long-term storage means 255, a system bus 270, amongst other components. All required components for enabling such an autonomous, semi-autonomous, or remotely controlled vehicle, are known *per se*.

Computerized devices can be suitably designed for implementing embodiments of the present invention. In that respect, it can be appreciated that some of the methods described herein are at least partly non-interactive, i.e., automated. Automated parts of such methods will typically be implemented as a combination of hardware and software.

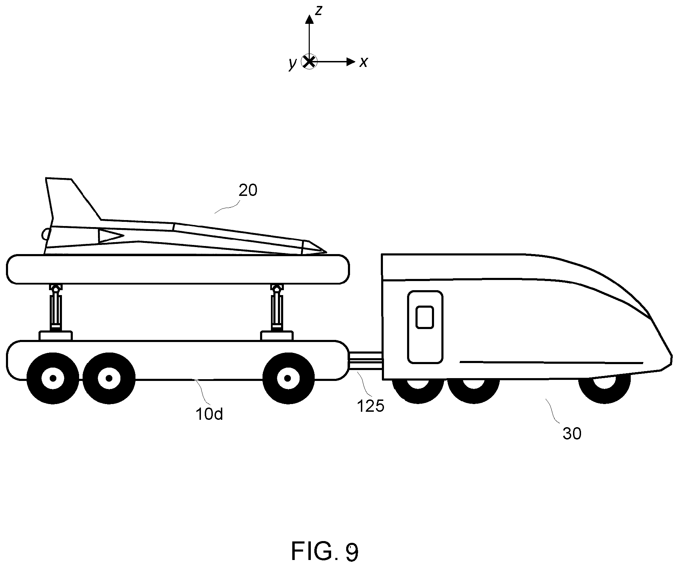

In the examples of FIGS. 6 and 7, the aircraft carrier ground vehicle 10 is a powered vehicle, for example an electric vehicle. However, the aircraft carrier vehicle may also be a trailer 10d, equipped with a trailer coupler 125, which mechanically links to a coupling component of a powered tractor unit 30, as illustrated in FIG. 9. The trailer may also be powered, hence supplementing the tractor unit to achieve the required horsepower. The trailer coupler 125 is preferably a multi-link coupler, i.e., with two or three attachment points. A multi-link coupler is used to increase the trailer stability when landing the aircraft 20. The coupler, whether multi-link or not, may further include or be coupled to a shock-absorbing device (not shown). Like the powered vehicles discussed earlier, the trailer is preferably multi-axled to maintain stability on landing and take-off, as seen in FIG. 9. The axle position can be optimized to favour stability, by notably ensuring that the centre of gravity of the system (vehicle or vehicle + aircraft) is well in the middle of the axles.

The following tables illustrate characteristics of examples of aircraft configurations and aircraft carrier vehicle systems according to embodiments.

**Table 1: Characteristics of representative landing aircrafts**

| **Class** | **Medium drone** | **Medium airliner** | **Large airliner** | **Suborbital spaceplane** |
|---|---|---|---|---|
| **Maximum take-off weight (kg)** | 4760 | 78245 | 356000 | 325000 |
| **Maximum landing weight (kg)** | 4284 | 65317 | 255800 | 55000 |
| **Fuselage length (m)** | 11 | 39.5 | 70.51 | 83.13 |
| **Acceleration at take-off (m/s²)** | 2.3 | 1.96 | 2.3 | 2.3 |
| **Deceleration at landing (m/s²)** | 4.6 | 4.6 | 4.6 | 4.6 |

**Table 2: Characteristics of a suitable aircraft carrier vehicle for a medium airliner (78 tons)**

| **Component** | **Subcomponent** | **Material** | **Quantity** | **Mass (Kg)** |
|---|---|---|---|---|
| **Coupling system** | Suction cups | Nitrile-butadiene-rubber (NBR) (density 1000 kg/m³) | 4330 | 139 |
| | Foam | Elastomer (density 1100kg/m³) | 1 | 606 |
| | Base plate | Aluminium alloy 7075 sandwich structure (300 kg/m3) | 1 | 1575 |
| **Platform and actuation system** | Ball joints | Steel alloy | 4 | 2 |
| | Oleo-pneumatic struts | Steel alloys/hydraulic fluid/air | 4 | 2286 |
| | Vacuum tank | Stainless steel (7500kg/m³) | 1 | 113 |
| | Pump (7.5 HP) | Steel and iron alloys | 1 | 80 |
| | Universal joints | Steel alloy | 4 | 2 |
| **Base** | Trailer base | Steel alloys | 1 | 8000 |
| | Wheels | Polymers | 18 | 810 |

In the example of Table 2, the total mass of the aircraft carrier system is approximately equal to 13.61 tons. It involves a single vehicle with a single unpowered axle (two unpowered wheels) and two tandem axles powered by four electromotors each (eight powered wheels), resulting in 10 × 8 tractions.

**Table 3: Characteristics of an aircraft carrier vehicle used for a large airliner (356 tons)**

| **Component** | **Sub-Component** | **Material** | **Quantity** | **Mass (Kg)** | **L × W × H (m)** |
|---|---|---|---|---|---|
| **Coupling system** | Suction cups | Nitrile-butadiene-rubber (NBR) (density 1000 kg/m³) | 16956 | 543 | 0.05 × 0.05 × 0.05 |
| | Foam | Elastomer (density 1100kg/m³) | 1 | 2372 | 21.19 × 2.50 × 0.05 |
| | Base plate | Aluminium alloy 7075 sandwich structure (300 kg/m3) | 1 | 1575 | 21.69 × 2.50 × 0.15 |
| **Platform and actuation system** | Ball joints | Steel alloy | 4 | 2 | 0.05 × 0.56 × 0.05 |
| | Oleo-pneumatic struts | Steel alloys/hydraulic fluid/air | 4 | 2800 | 1.00 × 0.05 × 0.05 |
| | Vacuum tank | Stainless steel (7500kg/m³) | 1 | 113 | 0.4 × 0.4 × 6.0 |
| | Pump (7.5 HP) | Steel and iron alloys | 1 | 80 | 0.465 × 0.64 × 0.33 |
| | Universal joints | Steel alloy | 4 | 2 | 0.07 × 0.07 × 0.14 |
| **Base** | Trailer base | Steel alloys | 1 | 8000 | 13.6 × 2.5 × 1.0 |
| | Wheels | Polymers | 18 | 810 | 1.06 × 0.45 × 0.45 |

In the example of Table 3, the total mass of the aircraft carrier system is approximately equal to 65.2 tons. The system involves four identical aircraft carrier vehicles, each having a mass of approximately 16.3 tons. Each aircraft carrier vehicle includes a single unpowered steering axle (two unpowered wheels), two tandem axles powered by four electromotors each (eight powered wheels) and one unpowered lift axle (2 unpowered wheels), resulting in 12 × 8 traction.

A number of variants can be contemplated. E.g., the number of aircraft carrier ground vehicles can be changed. For example, a single vehicle as specified in Table 3 can be used to perform the same mission as the example vehicle in Table 2. Conversely, several such vehicles can be used to perform the same mission as the example vehicle in Table 4 below.

**Table 4: Characteristics of a suitable aircraft carrier vehicle for suborbital spaceplane (325 tons take-off mass and 55 tons landing mass)**

| **Component** | **Sub-Component** | **Material** | **Quantity** | **Mass (Kg)** | **L × W × H (m)** |
|---|---|---|---|---|---|
| **Coupling system** | Suction cups | Nitrile-butadiene-rubber (NBR) (density 1000 kg/m³) | 3646 | 117 | 0.05 × 0.05 × 0.05 |
| | Foam | Elastomer (density 1100kg/m³) | 1 | 510 | 4.56 × 2.50 × 0.05 |
| | Base plate | Aluminium alloy 7075 sandwich structure (300 kg/m3) | 1 | 1575 | 5.06 × 2.50 × 0.15 |
| **Platform and actuation system** | Ball joints | Steel alloy | 4 | 2 | 0.05 × 0.56 × 0.05 |
| | Oleo-pneumatic struts | Steel alloys/hydraulic fluid/air | 4 | 1925 | 1.00 × 0.05 × 0.05 |
| | Vacuum tank | Stainless steel (7500kg/m³) | 1 | 113 | 0.4 × 0.4 × 6.0 |
| | Pump (7.5 HP) | Steel and iron alloys | 1 | 80 | 0.46 × 0.64 × 0.33 |
| | Universal joints | Steel alloy | 4 | 2 | 0.07 × 0.07 × 0.14 |
| **Base** | Trailer base | Steel alloys | 1 | 8000 | 13.60 × 2.50 × 1.00 |
| | Wheels | Polymers | 18 | 810 | 1.06 × 0.45 × 0.45 |

In the example of Table 4, the total mass of the aircraft carrier system is approximately equal to 13.13 tons; it involves a single vehicle for landing a returning aircraft (due to the significantly lower landing mass). Four vehicles are used for take-off and landing a fuelled-up spaceplane in a mission-abort scenario.

A preferred mass ratio of the aircraft (whether at take-off or landing) to the system of aircraft carrier vehicles is preferably between 4 and 7, more preferably between 5 and 8, to ensure a satisfactory mechanical behaviour of the overall system (consisting of the aircraft and the aircraft carrier vehicle system).

Referring to FIGS. 10 - 12, another aspect of the invention is now described, which concerns an aircraft carrier ground vehicle system 1. The system comprises at least one, and preferably more than one aircraft carrier ground vehicles 10, 10a - d such as described in reference to the first aspect of the invention. The system 1 may for instance comprise several powered ground vehicles 10, each capable of accelerating to typical landing speeds of an aircraft, through built-in propulsion. In variants, some of the vehicles may be unpowered or sub-powered vehicles, which are towed by one or more tractor units in a tractor-trailer(s) configuration. The ground vehicles act as pivotable platforms.

The vehicles are preferably unmanned, remotely controlled vehicles. Their platforms may advantageously be remotely controlled thanks to computerized methods as noted above. To that aim, the system 1 may include a central control unit 11 that is configured to transmit control signals to each vehicles 10 via an antenna 12, as illustrated in FIG. 10. As noted earlier too, the central control unit 11 may possibly receive sensor signals from each or some of the vehicles, so as to remotely instruct to suitably rotate the landing platforms 104 of the vehicles to compensate for the inclination angle(s) of the aircraft 20. Further instructions may be sent to the vehicles to coordinate movements of the vehicles, to allow the aircraft 20 to land on the multiple landing platforms of the vehicles.

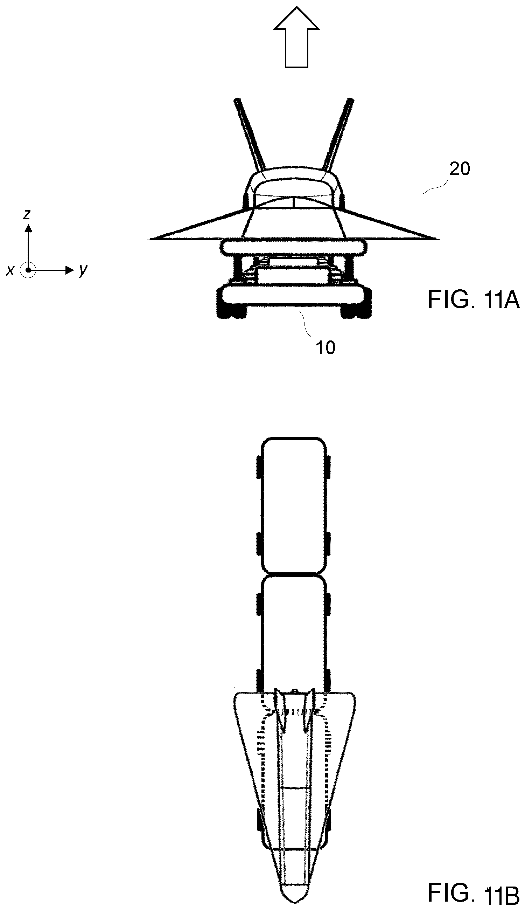

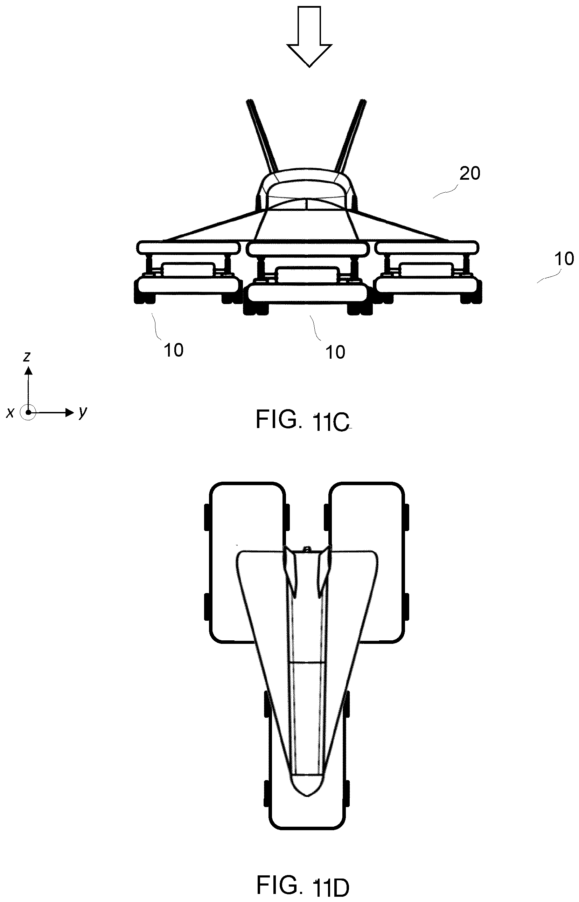

In such embodiments, the vehicles 10 are remotely controlled and behave as a swarm, which, as a whole, can be operated to ensure a safe landing of the aircraft 20. There are multiple advantages to operating the vehicles in a swarming configuration. First, the vehicle swarm can be operated to provide multiple landing points, as illustrated in FIGS. 11C, 11D, and 12, notably for heavy aircrafts (typically of more than 20 tons). There, the multiple vehicles involved will typically distribute (laterally and/or longitudinally) under the aircraft to best receive it. Conversely, on take-off, a train of vehicles (whether mechanically connected or not) can be used to help propel the aircraft. E.g., one or more vehicles may be used to push or pull the vehicle that initially supports the aircraft, to ensure redundancy on take-off, as illustrated in FIGS. 11A and 11B. Having a system of swarmed vehicles can be extremely helpful, notably in emergency situations. For example, if the aircraft must operate an emergency landing short after take-off, the vehicle swarm, which is already deployed on the runway, can quickly reorganize to adopt a lateral configuration and land the aircraft.

Final aspects of the invention concerns landing and take-off methods, which rely on aircraft carrier ground vehicles 10, or systems 1 of such vehicles, as described above. Such methods aim at operating an aircraft that is free of a landing gear. Several features of such methods have already been described above, be it implicitly, in reference to other aspects of the invention. Such methods are only succinctly described in the following.

FIGS. 6, 11C, and 11D illustrate a method of landing an aircraft 20, using an aircraft carrier ground vehicle 10. In short, the vehicle is accelerated, and its speed is adjusted to the landing speed of the aircraft 20, to bring the vehicle at a landing position of the aircraft 20 (i.e., an expected touch down position), e.g., using a remote control or autonomous driving method. In addition, the landing platform 104 of the vehicle is rotated to match the inclination angle of the aircraft 20. Note, the landing platform may initially be rotated, prior to or while accelerating the vehicle. Moreover, the rotation angle(s) may possibly be adjusted, dynamically, during the approach phase. The landing platform may typically be pivoted with respect to the pitch axis, and/or the roll axis, to compensate for crosswind, if necessary. Similarly, the vehicle speed may be repeatedly adjusted to best meet the rendezvous point. The aircraft 20 eventually lands on the landing platform as the vehicle moves along the landing direction of the aircraft 20.

FIGS. 7, 11A, and 11B, illustrate an aircraft take-off method, wherein an aircraft 20 is first loaded to and stowed on the landing platform of the vehicle 10, prior to accelerating the vehicle to a take-off speed of the aircraft 20. Once the combined system (vehicle and aircraft) has achieved the desired take-off speed, the aircraft 20 is released for take-off. The landing platform may be slightly rotated around to achieve a take-off configuration. The platform may for instance be rotated prior to or while accelerating the carrier vehicle, e.g., pivoted with respect to the pitch axis, and/or the roll axis.

While the present invention has been described with reference to a limited number of embodiments, variants, and the accompanying drawings, it will be understood by those skilled in the art that various changes may be made, and equivalents may be substituted without departing from the scope of the present invention, as defined by the appended claims. In particular, a feature (device-like or method-like) recited in a given embodiment, variant or shown in a drawing may be combined with or replace another feature in another embodiment, variant, or drawing, without departing from the scope of the present invention, as defined by the appended claims. Various combinations of the features described in respect of any of the above embodiments or variants may accordingly be contemplated, that remain within the scope of the appended claims. In addition, many minor modifications may be made to adapt a particular situation or material to the teachings of the present invention without departing from its scope, as long as these modifications remain within the scope defined by the appended claims. Therefore, it is intended that the present invention is not limited to the particular embodiments disclosed, but that the present invention will include all embodiments falling within the scope of the appended claims. In addition, many other variants than explicitly touched above can be contemplated. For example, other types of coupling mechanisms and joints may be involved.

### REFERENCE LIST

| **System** | |
|---|---|
| Aircraft carrier ground vehicle system | 1 |
| Central control unit | 11 |
| Transmission/reception antenna | 12 |

| **Vehicles and equipment** | |
|---|---|
| Self-powered vehicle | 10, 10a-c |
| Aircraft carrier ground vehicle | 10, 10a-d |
| Trailer vehicle | 10d |
| Aircraft | 20, 20a |
| Powered tractor unit | 30 |
| Chassis/heat sink | 102 |
| Front spoiler | 120 |
| Trailer coupler | 125 |

| **Coupling means and joints** | |
|---|---|
| Piston rod | 1061 |
| Piston head | 1062 |
| Cylinder tube/barrel | 1064 |
| Coupling mechanism (pneumatic cylinders) | 106, 106c |
| Auxiliary dampers | 107, 107b |
| Revolute joint (pin/hinge joint) | 116, 118 |
| Ball-and-socket joints | 109 |
| Thermal communication element | 115 |

| **Actuation means** | |
|---|---|
| Actuation mechanism | 108, 108a-c |
| Hoses | 111, 113 |
| Controlled valves | 112, 114 |

| **Platform** | |
|---|---|
| Landing platform | 104, 104a |
| Auxiliary damper pads | 104b |
| Suction cups | 103 |
| Deformable material layer (foam material layer) | 105 |
| Pressurization system | 110 |
| **Vehicle control system** | 300 |
| Receiver | 302 |
| Transmitter | 304 |
| Sensors | 310 |
| Sensor receiving unit | 320 |
| Vehicle motion control unit | 360 |
| Actuation mechanism control units | 1085 |
| Computerized unit | 202 |

| **Computerized unit modules and components** | |
|---|---|
| CPU | 230 |
| Memory controller(s) | 240 |
| Memory | 250 |
| Long-term storage | 255 |
| System bus | 270 |

## Claims

1. An aircraft carrier ground vehicle (10, 10a - d), comprising:
a chassis (102);
a landing platform (104, 104a) designed to accommodate an aircraft;
a coupling mechanism (106, 106c), which connects the landing platform (104, 104a) to the chassis (102) to form a kinematic pair, in which the landing platform (104, 104a) is rotatably mounted on the chassis (102);
an actuation mechanism (108, 108a - c) adapted to rotate the landing platform (104, 104a) relative to the chassis (102), to allow an aircraft (20) to land on the landing platform (104, 104a) as the vehicle (10, 10a - d) moves along a landing direction of the aircraft (20) and compensate for an inclination angle of the aircraft (20) on landing, in operation; and
latching means adapted for gripping a structural part of the aircraft (20) on landing, **characterised in that** the latching means includes a soft robotic suction cup latching mechanism.

2. The aircraft carrier ground vehicle (10, 10a - d) according to claim **1,** wherein
the coupling mechanism (106, 106c) is designed to allow an average plane of the landing platform (104, 104a) to pivot by at most a first angle around an axis that is parallel to an axle direction (y) of the vehicle (10, 10a - d).

3. The aircraft carrier ground vehicle (10, 10a - d) according to claim **2,** wherein
the coupling mechanism (106, 106c) is further designed to allow the average plane of the landing platform (104, 104a) to pivot by at most a second angle around a longitudinal direction (x) of the vehicle (10, 10a - d).

4. The aircraft carrier ground vehicle (10, 10a - d) according to any one of claims **1** to **3,** wherein
the coupling mechanism (106, 106c) includes a pneumatic suspension system having at least two pneumatic cylinders (106, 106c) connecting the chassis (102) to the landing platform (104, 104a),
the pneumatic cylinders (106, 106c) are actuatable by the actuation mechanism (108, 108a - c) to rotate the landing platform (104, 104a) relative to the chassis (102), in operation,
preferably, the pneumatic suspension system includes at least four pneumatic cylinders (106, 106c) connecting the chassis (102) to the landing platform (104, 104a),
preferably, the pneumatic suspension system includes six pneumatic cylinders (106c), the platform (104) and the pneumatic suspension system being jointly configured as a Stewart platform.

5. The aircraft carrier ground vehicle (10, 10a - d) according to claim **4,** wherein
the actuation mechanism (108, 108a - c) includes pressurization means connected to each of the pneumatic cylinders (106, 106c), so as to independently operate the pneumatic cylinders as double-acting cylinders.

6. The aircraft carrier ground vehicle according to claim **4** or **5,** wherein
a cylinder tube (1064) of each of the pneumatic cylinders (106) is in thermal communication (115) with a heat sink (102), the latter preferably forming part of the chassis (102),
the coupling mechanism (106, 106c) preferably comprises ball-and-socket joints (109) linking piston rods (1061) of respective ones of the pneumatic cylinders (106, 106c) to the landing platform (104), and
the coupling mechanism (106) preferably comprises revolute joints (116, 118) linking respective ones of the pneumatic cylinders (106) to the chassis (102).

7. The aircraft carrier ground vehicle (10, 10a - d) according to any one of claims **1** to **6,** wherein
the landing platform (104) further includes a deformable material layer (105), preferably a foam material layer, extending on an exposed surface of the landing platform (104).

8. The aircraft carrier ground vehicle (10, 10a - d) according to claim **7,** wherein
the vehicle (10, 10a - d) further includes a pressurization system (110),
the soft robotic suction cup latching mechanism comprises an array of suction cups (103), which are at least partly embedded in the deformable material layer (105),
the suction cups (103) are open on an exposed surface of the deformable material layer (105), and
the suction cups (103) are connected to said pressurization system (110).

9. The aircraft carrier ground vehicle (10a, 10b) according to any one of claims **1** to **8,** wherein
the vehicle (10a, 10b) further includes one or more auxiliary dampers (107, 107b), each including a landing pad, so as to allow the aircraft (20) to land on both the landing platform (104) and the one or more auxiliary dampers (107, 107b) as the vehicle moves along the landing direction of the aircraft (20), in operation.

10. The aircraft carrier ground vehicle (10, 10a - d) according to any one of claims **1** to **9,** wherein the vehicle (10, 10a - d) further includes
a vehicle control system (360), the latter comprising
one or more control units (1085) coupled to the actuation mechanism (108) to control a rotation of the landing platform (104) relative to the chassis (102), and
one or more receivers (302) coupled to the one or more control units (1085), the receivers (302) configured to receive instruction signals for the vehicle control system (360) to forward corresponding control signals to the one or more control units (1085).

11. The aircraft carrier ground vehicle according to any one of claims **1** to **10,** wherein
the vehicle (10, 10a, 10b) is a powered vehicle, preferably an electric vehicle, and is preferably one of
an autonomous vehicle,
a semi-autonomous vehicle, and
a remotely controlled vehicle, and
the vehicle (10, 10a - d) is preferably designed to allow taxiing and take-off of the aircraft (20).

12. The aircraft carrier ground vehicle (10d) according to any one of claims **1** to **10,** wherein
the vehicle (10d) is a trailer equipped with a trailer coupler (125) adapted to mechanically link to a coupling component of a powered tractor unit (30), and
the trailer coupler (125) is preferably a multi-link coupler, which, more preferably, includes or is coupled to a shock-absorbing device.

13. An aircraft carrier ground vehicle system (1) comprising
one or more aircraft carrier ground vehicles (10, 10a - d), each according to any one of claims **1** to **12.**

14. The system (1) according to claim **13,** wherein:
the system (1) includes at least two of said vehicles (10);
each of the vehicles (10) is a powered vehicle, which is remotely controlled; and
the system (1) further includes a central control unit (11) that is configured to transmit control signals to each of the vehicles (10) and, preferably, receive sensor signals from each of the vehicles, so as to
rotate the landing platforms (104) of the vehicles to compensate for an inclination angle of the aircraft (20) on landing, and
coordinate movements of the vehicles to allow the aircraft (20) to land on the landing platforms (104) of the vehicles as they move along the landing direction of the aircraft (20), in operation.

15. A method of landing an aircraft (20), the method comprising:
providing an aircraft carrier ground vehicle according to any one of claims **1** to **12;**
accelerating the vehicle to adjust the speed of the vehicle to a landing speed of the aircraft (20), to bring the vehicle at a landing position of the aircraft (20);
rotating the landing platform (104) of the vehicle to match an inclination angle of the aircraft (20); and
landing the aircraft (20) on the landing platform (104) as the vehicle moves along the landing direction of the aircraft (20) and preferably gripping a structural part of the aircraft (20) thanks to said soft robotic suction cup latching mechanism.

16. An aircraft take-off method comprising:
providing an aircraft carrier ground vehicle according to any one of claims **1** to **12;**
loading and stowing an aircraft (20) on the landing platform (104) of the vehicle;
accelerating the vehicle to a take-off speed of the aircraft (20); and
releasing the aircraft (20) for take-off with the landing platform (104) rotated to a take-off configuration, if necessary after releasing said structural part of the aircraft (20) from the soft robotic suction cup latching mechanism.

## Patentansprüche

1. Ein Bodenfahrzeug für Flugzeugträger (10, 10a - d), umfassend:
ein Fahrgestell (102);
eine Landeplattform (104, 104a), die zur Aufnahme eines Flugzeugs ausgelegt ist;
einen Kupplungsmechanismus (106, 106c), der die Landeplattform (104, 104a) mit dem Fahrgestell (102) verbindet, um ein kinematisches Paar zu bilden, wobei die Landeplattform (104, 104a) drehbar am Fahrgestell (102) gelagert ist;
einen Betätigungsmechanismus (108, 108a - c), der dazu ausgelegt ist, die Landeplattform (104, 104a) relativ zum Fahrgestell (102) zu drehen, um einem Flugzeug (20) die Landung auf der Landeplattform (104, 104a) zu ermöglichen, während sich das Fahrzeug (10, 10a - d) sich entlang einer Landungsrichtung des Flugzeugs (20) bewegt, und um im Betrieb einen Neigungswinkel des Flugzeugs (20) bei der Landung auszugleichen; und
eine Verriegelungsvorrichtung, die dazu ausgelegt ist, bei der Landung ein strukturelles Teil des Flugzeugs (20) zu greifen,
**dadurch gekennzeichnet, dass** die Verriegelungsvorrichtung einen weichen robotischen Saugnapf-Verriegelungsmechanismus umfasst.

2. Das Bodenfahrzeug für Flugzeugträger (10, 10a - d) nach Anspruch **1,** wobei
der Kupplungsmechanismus (106, 106c) so ausgelegt ist, dass sich eine Mittelebene der Landeplattform (104, 104a) um höchstens einen ersten Winkel um eine Achse schwenken kann, die parallel zu einer Achsrichtung (y) des Fahrzeugs (10, 10a - d) verläuft.

3. Das Bodenfahrzeug für Flugzeugträger (10, 10a - d) nach Anspruch **2,** wobei
der Kupplungsmechanismus (106, 106c) weiter so ausgelegt ist, dass die Mittelebene der Landeplattform (104, 104a) um höchstens einen zweiten Winkel um eine Längsrichtung (x) des Fahrzeugs (10, 10a - d) schwenkbar ist.

4. Das Bodenfahrzeug für Flugzeugträger (10, 10a - d) nach einem der Ansprüche **1** bis **3,** wobei
der Kupplungsmechanismus (106, 106c) ein pneumatisches Federungssystem mit mindestens zwei Pneumatikzylindern (106, 106c) umfasst, die das Fahrgestell (102) mit der Landeplattform (104, 104a) verbinden,
die Pneumatikzylinder (106, 106c) durch den Betätigungsmechanismus (108, 108a - c) betätigbar sind, um die Landeplattform (104, 104a) im Betrieb relativ zum Fahrgestell (102) zu drehen,
vorzugsweise das pneumatische Federungssystem mindestens vier Pneumatikzylinder (106, 106c) umfasst, die das Fahrgestell (102) mit der Landeplattform (104, 104a) verbinden, und
vorzugsweise das pneumatische Federungssystem sechs Pneumatikzylinder (106c) umfasst, wobei die Plattform (104) und das pneumatische Federungssystem gemeinsam als Stewart-Plattform ausgebildet sind.

5. Das Bodenfahrzeug für Flugzeugträger (10, 10a - d) nach Anspruch **4,** wobei
der Betätigungsmechanismus (108, 108a - c) Druckbeaufschlagungsmittel umfasst, die mit jedem der Pneumatikzylinder (106, 106c) verbunden sind, um die Pneumatikzylinder unabhängig voneinander als doppeltwirkende Zylinder zu betreiben.

6. Das Bodenfahrzeug für Flugzeugträger nach Anspruch **4** oder **5,** wobei
ein Zylinderrohr (1064) jedes der Pneumatikzylinder (106) in thermischer Verbindung (115) mit einem Kühlkörper (102) steht, wobei letzterer vorzugsweise einen Teil des Fahrgestells (102) bildet,
der Kupplungsmechanismus (106, 106c) weiter Kugelgelenke (109) umfasst, die Kolbenstangen (1061) der jeweiligen Pneumatikzylinder (106, 106c) mit der Landeplattform (104) verbinden, und
der Kupplungsmechanismus (106) weiter Drehgelenke (116, 118) umfasst, die jeweilige der Pneumatikzylinder (106) mit dem Fahrgestell (102) verbinden.

7. Das Bodenfahrzeug für Flugzeugträger (10, 10a - d) nach einem der Ansprüche **1** bis 6, wobei
die Landeplattform (104) weiter eine Schicht aus verformbarem Material (105), vorzugsweise eine Schaumstoffschicht, umfasst, die sich auf einer freiliegenden Oberfläche der Landeplattform (104) erstreckt.

8. Das Bodenfahrzeug für Flugzeugträger (10, 10a - d) nach Anspruch **7,** wobei
das Fahrzeug (10, 10a - d) weiter ein Druckbeaufschlagungssystem (110) umfasst,
der weiche robotische Saugnapf-Verriegelungsmechanismus eine Anordnung von Saugnäpfen (103) umfasst, die zumindest teilweise in die verformbare Materialschicht (105) eingebettet sind,
die Saugnäpfe (103) an einer freiliegenden Oberfläche der verformbaren Materialschicht (105) offen sind, und
die Saugnäpfe (103) mit dem Druckbeaufschlagungssystem (110) verbunden sind.

9. Das Bodenfahrzeug für Flugzeugträger (10a, 10b) nach einem der Ansprüche **1** bis **8,** wobei
das Fahrzeug (10a, 10b) weiter einen oder mehrere Hilfsdämpfer (107, 107b) aufweist, die jeweils eine Landeplattform umfassen, damit das Flugzeug (20) im Betrieb sowohl auf der Landeplattform (104) als auch auf dem einen oder den mehreren Hilfsdämpfern (107, 107b) landen kann, während sich das Fahrzeug im Betrieb entlang der Landungsrichtung des Flugzeugs (20) bewegt.

10. Das Bodenfahrzeug für Flugzeugträger (10, 10a - d) gemäß einem der Ansprüche **1** bis **9,** wobei das Fahrzeug (10, 10a - d) weiter
ein Fahrzeugsteuerungssystem (360) umfasst, wobei dieses
eine oder mehrere Steuereinheiten (1085) umfasst, die mit dem Betätigungsmechanismus (108) gekoppelt sind, um eine Drehung der Landeplattform (104) relativ zum Fahrgestell (102) zu steuern, sowie
einen oder mehrere Empfänger (302), die mit der einen oder den mehreren Steuereinheiten (1085) gekoppelt sind, wobei die Empfänger (302) so konfiguriert sind, dass sie Befehlssignale für das Fahrzeugsteuerungssystem (360) empfangen, um entsprechende Steuersignale an die eine oder die mehreren Steuereinheiten (1085) weiterzuleiten.

11. Das Bodenfahrzeug für Flugzeugträger nach einem der Ansprüche **1** bis **10,** wobei
das Fahrzeug (10, 10a, 10b) ein motorisiertes Fahrzeug, vorzugsweise ein Elektrofahrzeug, ist und vorzugsweise eines der folgenden ist:
ein autonomes Fahrzeug,
ein halbautonomes Fahrzeug und
ein ferngesteuertes Fahrzeug,
und das Fahrzeug (10, 10a-d) bevorzugt so ausgestaltet ist, dass es das Rollen und das Abheben des Flugzeugs (20) erlaubt.

12. Das Bodenfahrzeug für Flugzeugträger (10d) nach einem der Ansprüche **1** bis **10,** wobei
das Fahrzeug (10d) ein Anhänger ist, der mit einer Anhängerkupplung (125) ausgestattet ist, die dazu ausgelegt ist, sich mechanisch mit einer Kupplungskomponente einer motorisierten Zugmaschine (30) zu verbinden, und
die Anhängerkupplung (125) vorzugsweise eine Mehrgelenkkupplung ist, die, noch bevorzugter, eine Stossdämpfungsvorrichtung umfasst oder mit einer solchen gekoppelt ist.

13. Ein Bodenfahrzeugsystem für Flugzeugträger (1), umfassend
ein oder mehrere Bodenfahrzeuge für Flugzeugträger (10, 10a - d), jeweils nach einem der Ansprüche **1** bis **12.**

14. Das System (1) nach Anspruch **13,** wobei:
das System (1) mindestens zwei der genannten Fahrzeuge (10) umfasst;
jedes der Fahrzeuge (10) ein motorisiertes Fahrzeug ist, das ferngesteuert wird; und
das System (1) weiter eine zentrale Steuereinheit (11) umfasst, die so konfiguriert ist, dass sie Steuersignale an jedes der Fahrzeuge (10) überträgt und vorzugsweise Sensorsignale von jedem der Fahrzeuge empfängt, um
die Landeplattformen (104) der Fahrzeuge zu drehen, um einen Neigungswinkel des Flugzeugs (20) bei der Landung auszugleichen, und
die Bewegungen der Fahrzeuge zu koordinieren, damit im Betrieb das Flugzeug (20) auf den Landeplattformen (104) der Fahrzeuge landen kann, während sich diese entlang der Landungsrichtung des Flugzeugs (20) bewegen.

15. Ein Verfahren zum Landen eines Flugzeugs (20), wobei das Verfahren umfasst:
Bereitstellen eines Bodenfahrzeugs für Flugzeugträger nach einem der Ansprüche **1** bis **12;**
Beschleunigen des Fahrzeugs, um die Geschwindigkeit des Fahrzeugs an eine Landegeschwindigkeit des Flugzeugs (20) anzupassen, um das Fahrzeug in eine Landeposition des Flugzeugs (20) zu bringen;
Drehen der Landeplattform (104) des Fahrzeugs, um sie an einen Neigungswinkel des Flugzeugs (20) anzupassen; und
Landen des Flugzeugs (20) auf der Landeplattform (104), während sich das Fahrzeug entlang der Landungsrichtung des Flugzeugs (20) bewegt, und vorzugsweise Greifen eines strukturellen Teils des Flugzeugs (20) dank des genannten weichen robotischen Saugnapf-Verriegelungsmechanismus.

16. Ein Verfahren zum Starten eines Flugzeugs, umfassend:
Bereitstellen eines Bodenfahrzeugs für Flugzeugträger nach einem der Ansprüche **1** bis **12;**
Verladen und Verstauen eines Flugzeugs (20) auf der Landeplattform (104) des Fahrzeugs;
Beschleunigen des Fahrzeugs auf eine Startgeschwindigkeit des Flugzeugs (20); und
Freigeben des Flugzeugs (20) zum Start, wobei die Landeplattform (104) in eine Startkonfiguration gedreht wird, gegebenenfalls nach dem Lösen des strukturellen Teils des Flugzeugs (20) aus dem weichen robotischen Saugnapf-Verriegelungsmechanismus.

## Revendications

1. Véhicule terrestre porteur d'aéronef (10, 10a - d), comprenant :
un châssis (102) ;
une plate-forme d'atterrissage (104, 104a) conçue pour accueillir un aéronef ;
un mécanisme d'accouplement (106, 106c), qui relie la plate-forme d'atterrissage (104, 104a) au châssis (102) pour former une paire cinématique, dans lequel la plate-forme d'atterrissage (104, 104a) est montée de manière rotative sur le châssis (102) ;
un mécanisme d'actionnement (108, 108a - c) adapté pour faire tourner la plate-forme d'atterrissage (104, 104a) par rapport au châssis (102), afin de permettre à un aéronef (20) d'atterrir sur la plate-forme d'atterrissage (104, 104a) lorsque le véhicule (10, 10a - d) se déplace le long d'une direction d'atterrissage de l'aéronef (20) et de compenser un angle d'inclinaison de l'aéronef (20) à l'atterrissage, en fonctionnement ; et
des moyens d'accrochage adaptés pour agripper une partie structurelle de l'aéronef (20) à l'atterrissage, **caractérisé en ce que** les moyens d'accrochage comprennent un mécanisme d'accrochage par ventouses robotiques souples.

2. Le véhicule terrestre porteur d'aéronef (10, 10a - d) selon la revendication **1,** dans lequel
le mécanisme d'accouplement (106, 106c) est conçu pour permettre à un plan moyen de la plate-forme d'atterrissage (104, 104a) de pivoter d'au plus un premier angle autour d'un axe qui est parallèle à une direction d'essieu (y) du véhicule (10, 10a - d).

3. Véhicule terrestre porteur d'aéronef (10, 10a - d) selon la revendication **2,** dans lequel
le mécanisme d'accouplement (106, 106c) est en outre conçu pour permettre au plan moyen de la plate-forme d'atterrissage (104, 104a) de pivoter d'au plus un second angle autour d'une direction longitudinale (x) du véhicule (10, 10a - d).

4. Véhicule terrestre porteur d'aéronef (10, 10a - d) selon l'une quelconque des revendications **1** à **3,** dans lequel
le mécanisme d'accouplement (106, 106c) comprend un système de suspension pneumatique comportant au moins deux vérins pneumatiques (106, 106c) reliant le châssis (102) à la plate-forme d'atterrissage (104, 104a),
les vérins pneumatiques (106, 106c) sont actionnables par le mécanisme d'actionnement (108, 108a - c) pour faire pivoter la plate-forme d'atterrissage (104, 104a) par rapport au châssis (102), en fonctionnement,
de préférence, le système de suspension pneumatique comprend au moins quatre vérins pneumatiques (106, 106c) reliant le châssis (102) à la plate-forme d'atterrissage (104, 104a),
de préférence, le système de suspension pneumatique comprend six vérins pneumatiques (106c), la plate-forme (104) et le système de suspension pneumatique étant configurés conjointement en tant que plate-forme de Stewart.

5. Véhicule terrestre porteur d'aéronef (10, 10a - d) selon la revendication **4,** dans lequel
le mécanisme d'actionnement (108, 108a - c) comprend des moyens de mise sous pression reliés à chacun des vérins pneumatiques (106, 106c), de manière à faire fonctionner indépendamment les vérins pneumatiques en tant que vérins à double effet.

6. Véhicule terrestre porteur d'aéronef selon la revendication **4** ou **5,** dans lequel
un tube de vérin (1064) de chacun des vérins pneumatiques (106) est en communication thermique (115) avec un dissipateur thermique (102), ce dernier faisant de préférence partie du châssis (102),
le mécanisme d'accouplement (106, 106c) comprend de préférence des articulations à rotule (109) reliant les tiges de piston (1061) des vérins pneumatiques respectifs (106, 106c) à la plate-forme d'atterrissage (104), et
le mécanisme d'accouplement (106) comprend de préférence des articulations pivot (116, 118) reliant les vérins pneumatiques respectifs (106) au châssis (102).

7. Véhicule terrestre porteur d'aéronef (10, 10a - d) selon l'une quelconque des revendications **1** à **6,** dans lequel
la plate-forme d'atterrissage (104) comprend en outre une couche de matériau déformable (105), de préférence une couche de matériau en mousse, s'étendant sur une surface exposée de la plate-forme d'atterrissage (104).

8. Véhicule terrestre porteur d'aéronef (10, 10a - d) selon la revendication **7,** dans lequel
le véhicule (10, 10a - d) comprend en outre un système de pressurisation (110),
le mécanisme d'accrochage par ventouses robotiques souples comprend un réseau de ventouses (103), qui sont au moins partiellement encastrées dans la couche de matériau déformable (105),
les ventouses (103) débouchent sur une surface exposée de la couche de matériau déformable (105), et
les ventouses (103) sont reliées audit système de pressurisation (110).

9. Le véhicule terrestre porteur d'aéronef (10a, 10b) selon l'une quelconque des revendications **1** à **8,** dans lequel
le véhicule (10a, 10b) comprend en outre un ou plusieurs amortisseurs auxiliaires (107, 107b), chacun comprenant un patin d'atterrissage, de manière à permettre à l'aéronef (20) d'atterrir à la fois sur la plate-forme d'atterrissage (104) et sur le ou les amortisseurs auxiliaires (107, 107b) lorsque le véhicule se déplace dans la direction d'atterrissage de l'aéronef (20), en fonctionnement.

10. Véhicule terrestre porteur d'aéronef (10, 10a - d) selon l'une quelconque des revendications **1** à **9,** dans lequel le véhicule (10, 10a - d) comprend en outre
un système de commande du véhicule (360), ce dernier comprenant
une ou plusieurs unités de commande (1085) couplées au mécanisme d'actionnement (108) pour commander une rotation de la plate-forme d'atterrissage (104) par rapport au châssis (102), et
un ou plusieurs récepteurs (302) couplés à la ou aux unités de commande (1085), les récepteurs (302) étant configurés pour recevoir des signaux d'instruction destinés au système de commande du véhicule (360) afin de transmettre les signaux de commande correspondants à la ou aux unités de commande (1085).

11. Véhicule terrestre porteur d'aéronef selon l'une quelconque des revendications **1** à **10,** dans lequel
le véhicule (10, 10a, 10b) est un véhicule motorisé, de préférence un véhicule électrique, et est de préférence l'un parmi
un véhicule autonome,
un véhicule semi-autonome, et
un véhicule télécommandé, et
le véhicule (10, 10a - d) est de préférence conçu pour permettre le roulage et le décollage de l'aéronef (20).

12. Véhicule terrestre porteur d'aéronef (10d) selon l'une quelconque des revendications **1** à **10,** dans lequel
le véhicule (10d) est une remorque équipée d'un attelage de remorque (125) adapté pour se relier mécaniquement à un composant d'attelage d'un tracteur motorisé (30), et
l'attelage de remorque (125) est de préférence un attelage multibras, qui, de préférence, comprend ou est couplé à un dispositif d'amortissement de chocs.

13. Système de véhicules terrestres porteurs d'aéronef (1) comprenant
un ou plusieurs véhicules terrestres porteurs d'aéronef (10, 10a - d), chacun selon l'une quelconque des revendications **1** à **12** .

14. Le système (1) selon la revendication **13,** dans lequel :
le système (1) comprend au moins deux desdits véhicules (10) ;
chacun des véhicules (10) est un véhicule motorisé, qui est télécommandé ; et
le système (1) comprend en outre une unité de commande centrale (11) qui est configurée pour transmettre des signaux de commande à chacun des véhicules (10) et, de préférence, pour recevoir des signaux de capteurs provenant de chacun des véhicules, de manière à
faire pivoter les plates-formes d'atterrissage (104) des véhicules afin de compenser un angle d'inclinaison de l'aéronef (20) à l'atterrissage, et
coordonner les mouvements des véhicules pour permettre à l'aéronef (20) d'atterrir sur les plates-formes d'atterrissage (104) des véhicules alors qu'ils se déplacent dans la direction d'atterrissage de l'aéronef (20), en fonctionnement.

15. Procédé d'atterrissage d'un aéronef (20), le procédé comprenant les étapes consistant à :
fournir un véhicule terrestre porteur d'aéronef selon l'une quelconque des revendications **1** à **12 ;**
accélérer le véhicule pour ajuster la vitesse de celui-ci à une vitesse d'atterrissage de l'aéronef (20), afin d'amener le véhicule à une position d'atterrissage de l'aéronef (20) ;
faire pivoter la plate-forme d'atterrissage (104) du véhicule pour correspondre à l'angle d'inclinaison de l'aéronef (20) ; et
faire atterrir l'aéronef (20) sur la plate-forme d'atterrissage (104) tandis que le véhicule se déplace dans la direction d'atterrissage de l'aéronef (20) et, de préférence, agripper une partie structurelle de l'aéronef (20) au moyen dudit mécanisme d'accrochage à ventouses robotiques souples.

16. Procédé de décollage d'un aéronef comprenant les étapes consistant à :
fournir un véhicule terrestre porteur d'aéronef selon l'une quelconque des revendications **1** à **12 ;**
charger et arrimer un aéronef (20) sur la plate-forme d'atterrissage (104) du véhicule ;
accélérer le véhicule jusqu'à la vitesse de décollage de l'aéronef (20) ; et
libérer l'aéronef (20) pour le décollage, la plate-forme d'atterrissage (104) étant pivotée en configuration de décollage, si nécessaire après le relâchement de ladite partie structurelle de l'aéronef (20) du mécanisme d'accrochage par ventouses robotiques souples.
